# EUROPÄISCHE PATENTSCHRIFT

(11) **EP 1 056 948 B1**
(45) Veröffentlichungstag und Bekanntmachung des Hinweises auf die Patenterteilung: **13.10.2004**
(21) Anmeldenummer: 99910214.8
(22) Anmeldetag: 10.02.1999
(51) Int. Cl.: F04B 1/04, F04B 53/10

(54) **KOLBENPUMPE**
PISTON PUMP
POMPE A PISTON

(30) Priorität: 17.02.1998 DE 19806527
(43) Veröffentlichungstag der Anmeldung: 06.12.2000
(73) Patentinhaber: Continental Teves AG & Co. oHG, 60488 Frankfurt (DE)
(72) Erfinder: RISCH, Stephan, D-64331 Weiterstadt (DE); HINZ, Axel, D-61267 Neu-Anspach (DE); REINARTZ, Hans-Dieter, D-60439 Frankfurt am Main (DE); STEFFES, Helmut, D-65795 Hattersheim (DE); SONNENSCHEIN, Georg, D-65760 Eschborn (DE); MÜLLER, Marco, D-35633 Lahnau (DE); VOGEL, Günther, D-63303 Dreieich (DE); GREIFF, Uwe, D-61352 Bad Homburg v.d.H. (DE); WAGNER, Christoph, D-61231 Bad Nauheim (DE); BÖING, Joachim, D-65936 Frankfurt (DE)
(86) Internationale Anmeldenummer: PCT/EP1999/000866
(87) Internationale Veröffentlichungsnummer: WO 1999/042725

(56) Entgegenhaltungen:
- EP-A- 0 430 099
- EP-A- 0 761 967
- DE-A- 1 911 534
- DE-A- 3 208 770
- DE-A- 4 407 978
- DE-B- 1 165 364
- US-A- 4 738 595

## Beschreibung

Die vorliegende Erfindung bezieht sich auf eine Kolbenpumpe, insbesondere zur Verwendung in hydraulischen, schlupfgeregelten Bremsanlagen, gemäß dem Oberbegriff des Patentanspruches 1.

Eine derartige Kolbenpumpe ist beispielsweise aus der EP 0 631 050 A1 bekannt. Die Kolbenpumpe gemäß diesem Stand der Technik weist ein Druckventil und ein Saugventil auf, die in einem Pumpengehäuse angeordnet sind.

Insbesondere aus den Fig. 11 bis 17 der EP 0 631 050 A1 ist ein als Kugelventil ausgebildetes Druckventil offenbart, bei dem die Kugel gegen einen, als Radialbohrung ausgebildeten Sitz unter Verwendung eines Ringmaterials vorgespannt wird. Dieses bekannte Druckventil weist Nachteile dahingehend auf, daß die Montage des Ringmaterials auf dem Ventilkörper des Druckventils aufwendig und dessen Befestigung nicht besonders stabil ist. Das Aufweiten des Ringmaterials bei der Montage verringert die Federwirkung. Ferner ist bei dieser bekannten Anordnung ein Verdrehen des Ventilkörpers und damit ein Herausrutschen der Kugel auf dem Ventilsitz oder eine Änderung der Vorspannkraft möglich.

Ferner ist in der EP 0 631 050 ein axial angeordnetes Saugventil offenbart, das durch eine, von einem Federkäfig gehaltene Schraubenfeder vorgespannt ist. Die Schraubenfeder und der Halteelement sind dabei auf der dem Druckraum zugewandten Seite des Saugventils angeordnet, weshalb die angesaugte Bremsflüssigkeit durch die Federwindungen hindurchgesaugt werden muß, was den Saugwiderstand entscheidend erhöht.

Die Aufgabe der vorliegenden Erfindung besteht daher darin, die Nachteile des Standes der Technik zu vermeiden, und insbesondere eine Kolbenpumpe zu schaffen, bei der die Montage des Druckventils verbessert ist.

Diese Aufgabe wird durch die Merkmale des Patentanspruches 1 gelöst.

Ein Vorteil der vorliegenden Erfindung besteht darin, daß durch die Trennungzwischen Haltefunktion und Federfunktion mit Hilfe eines einleigen Bauteils der Ausschuß von mangelhaften Ventilen, und damit die Herstellungskosten, gesenkt werden. Ferner ist bei der Erfindung vorteilhaft, daß die Zeit für die Montage der erfindungsgemäßen Kolbenpumpe beträchtlich reduziert wird, wodurch die Kosten ebenfalls gesenkt werden. Durch die bauliche Zusammenfassung von Druck- und Saugventil ergibt sich überdies sowohl eine Raumersparnis als auch eine optimale Ausnutzung des im Pumpengehäuse für die Ventile verfügbaren Raumes. Die bauliche Zusammenfassung von Druck- und Saugventil gestattet eine einfache Verbohrung des Ventilkörpers, da keine separaten Ventile in dem Pumpenkörper untergebracht werden müssen.

Die Erfindung sowie weitere vorteile und Ausgestaltungen derselben werden nachfolgend unter Bezugnahme auf die beigefügten Zeichnungen erläuterL. In den Zeichnungen bezeichnen dieselben oder ähnliche Bezugszeichen die gleichen oder entsprechende Elemente. Es sei bemerkt, daß in der folgenden Figurenbeschreibung insbesondere auf die Unterschiede der verschiedenen Ausführungsbeispiele eingegangen wird. Hinsichtlich der Gemeinsamkeiten wird daher im allgemeinen auf die zuvor beschriebenen Ausführungsbeispiele verwiesen. In den Zeichnungen zeigt:
- Fig. 1: eine schematische Schnittansicht einer Kolbenpumpe;
- Fig. 2: eine schematische Längsschnittsansicht einer Ventilpatrone bzw. eines Bauelementes gemäß einem ersten Ausführungsbeispiel;
- Fig. 3: eine schematische Querschnittsansicht entlang der Linie III-III von Fig. 2;
- Fig. 4: eine Einzelansicht einer Halteklammer mit einer Feder gemäß dem Ausführungsbeispiel der Fig. 2 und 3;
- Fig. 5: eine schematische Längsschnittsansicht einer Ventilpatrone gemäß einem zweiten Ausführungsbeispiel;
- Fig. 6: eine schematische Längsschnittsansicht eines Bauelementes bzw. einer Ventilpatrone gemäß einem dritten Ausführungsbeispiel;
- Fig. 7: eine schematische Längsschnittsansicht einer Ventilpatrone gemäß einem Ausführungsbeispiel;
- Fig. 8: eine schematische Querschnittsansicht entlang der Linie VIII - VIII der Fig. 7;
- Fig. 9: eine schematische Ansicht von oben auf das, in Fig. 7 gezeigte Ausführungsbeispiel;
- Fig. 10: eine schematische, perspektivische Ansicht der Halteklammer zur Verwendung bei dem, in den Fig. 7 bis 9 dargestellten Ausführungsbeispiel;
- Fig. 11: eine schematische, perspektivische Ansicht auf eine Variante zu der in Fig. 10 dargestellten Halteklammer;
- Fig. 12: eine schematische Querschnittsansicht, entsprechend der Darstellung in Fig. 8, welche die Befestigung der in Fig. 11 gezeigten Halteklammer zeigt;
- Fig. 13: eine schematische Längsschnittsansicht einer Ventilpatrone gemäß einem Ausführungsbeispiel;
- Fig. 14: eine schematische, perspektivische Ansicht einer weggebrochenen Darstellung der Ventilpatrone gemäß Fig. 13;
- Fig. 15: eine schematische Querschnittsansicht des Ventilkörpers gemäß dem, in den Fig. 13 und 14 dargestellten, 1 Ausführungsbeispiel;
- Fig. 16: eine schematische Ansicht von der Seite auf den Ventilkörper gemäß Fig. 15;
- Fig. 17: eine schematische, perspektivische Ansicht auf den Ventilkörper gemäß den Fig. 15 und 16;
- Fig. 18: eine schematische Ansicht von oben auf den Ventilkörper der Fig. 15 bis 17;
- Fig. 19: eine schematische Längsschnittsansicht einer Ventilpatrone gemäß einem weiteren Ausführungsbeispiel;
- Fig. 20: eine schematische Querschnittsansicht entlang der Linie XX-XX der Fig. 19;
- Fig. 21 bis Fig. 24: schematische Längsschnittsansichten von Ventilpatronen gemäß weiteren Ausführungsbeispielen;
- Fig. 25: eine schematische, perspektivische Ansicht auf eine Halteklammer zur Verwendung bei dem, in Fig. 24 gezeigten, Ausführungsbeispiel;
- Fig. 26: eine Längsschnittsansicht einer Ventilpatrone gemäß einem Ausführungsbeispiel ;
- Fig. 27: eine Längsschnittsansicht einer Ventilpatrone gemäß einem Ausführungsbeispiel ;
- Fig. 28: eine Draufsicht auf die Ventilpatrone nach Fig. 27 mit einem Druckventil;
- Fig. 29: eine schematische Seitenansicht einer Blattfeder des Druckventils von Fig. 28;
- Fig. 30: eine Längsschnittsansicht einer Ventilpatrone gemäß einem Ausführungsbeispiel ;
- Fig. 31: eine Draufsicht auf die Ventilpatrone nach Fig. 30 mit einem Druckventil;
- Fig. 32: eine schematische Seitenansicht einer Blattfeder des Druckventils von Fig. 31;
- Fig. 33: eine Längsschnittsansicht einer Ventilpatrone gemäß einem Ausführungsbeispiel
- Fig. 34: eine Seitenansicht der Ventilpatrone nach Fig. 33 mit einem Druckventil; und
- Fig. 35: eine Querschnittsansicht mit Ventilpatrone, Kolben und Blattfeder des Druckventils aus Fig. 34 entlang der Linie A-A.

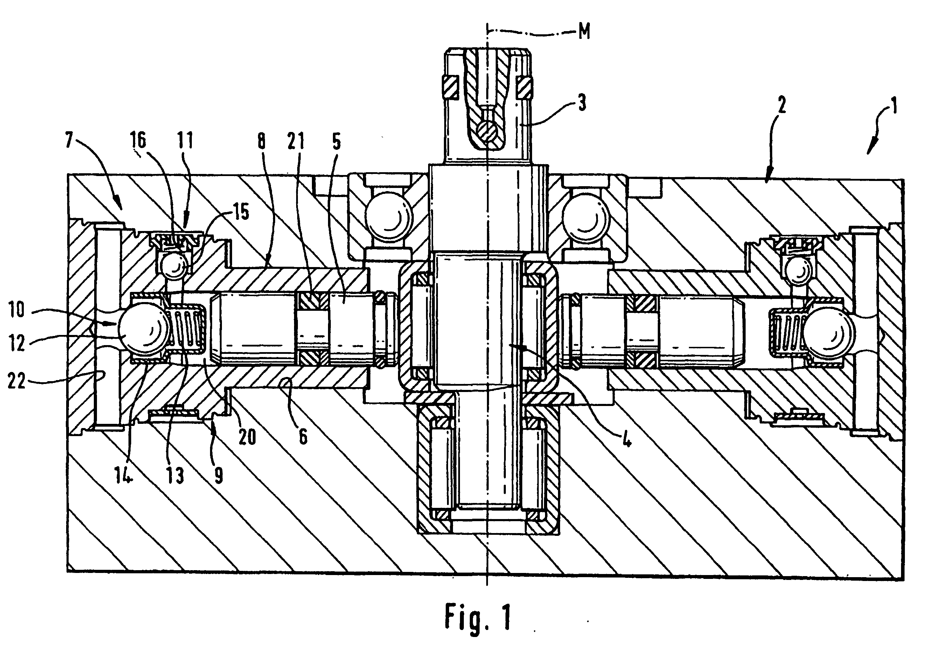

In Fig. 1 ist schematisch eine Schnittansicht einer Kolbenpumpe 1 dargestellt, die insbesondere zur Verwendung in einer ABS (Anti-Blockier-System), ASR (Antriebs-Schlupf-Regelung) oder ESP (Elektronisches Stabilitäts-Programm) -Anlage einer geregelten Fahrzeugbremse geeignet ist. Die Kolbenpumpe 1 ist gemäß der Schnittansicht der Fig. 1 im wesentlichen symmetrisch zur Mittellinie M aufgebaut. In ihrem Gehäuse 2 weist die Kolbenpumpe 1 eine von einem (nicht dargestellten) Elektromotor angetriebene Antriebswelle 3 auf. Ein an der Antriebswelle 3 angeordneter Exzenter 4 liegt an Pumpenkolben 5 an, die beispielsweise über einen Kuppelring miteinander verbunden sind. Durch den Exzenter 4 wird die Drehbewegung der Antriebswelle 3 in eine Hubbewegung der Kolben 5 umgesetzt.

Das Pumpengehäuse 2 weist desweiteren wenigstens eine, vorzugsweise gestufte, Bohrung 6 auf, in der jeweils ein Bauelement bzw. eine Ventilpatrone 7 angeordnet ist. Erfindungsgemäß ist das Bauelement 7 druckdicht, insbesondere mittels Verstemmen oder Verclinchen, im Pumpengehäuse 2 befestigt. Die Ventilpatrone 7 ist vorzugsweise aus Kunststoff hergestellt, kann aber auch aus einem anderen geeigneten Material bestehen. Die Ventilpatrone bzw. das Bauelement 7 weist einen bezüglich der Mittellinie M inneren, im wesentlichen hülsenförmigen Abschnitt 8 und einen bezüglich der Mittellinie M äußeren Abschnitt oder Basisabschnitt 9 auf. Der hülsenförmige Abschnitt 8, der auch als An- oder Fortsatz der Patrone 7 bezeichnet werden kann, dient als Führung oder Lauffläche für den Pumpenkolben 5.

An dem Bauelement 7 sind Ventilsitze für ein druckgesteuertes Saugventil 10 und ein druckgesteuertes Druckventil 11 ausgebildet. Das Saugventil 10 weist einen Ventilschließkörper 12 auf, der von einer Druckfeder 13 gegen seinen an der Patrone 7 ausgebildeten Ventilsitz gedrückt wird. Ferner ist ein vorzugsweise topfförmig ausgebildetes Halteelement 14 zur Führung, Lagerung und Halterung der Druckfeder 13 in der Ventilpatrone 7 vorgesehen, wobei das Halteelement 14 insbesondere form- oder kraftschlüssig an der Patrone 7 befestigt ist. Im Halteelement 14 ist zumindest eine Öffnung 24 zum Durchtritt von Hydraulik- bzw. Bremflüssigkeit vorgesehen.

Das Druckventil 11 weist einen Ventilschließkörper 15 auf, der ebenfalls von einer Druckfeder 16 gegen seinen Ventilsitz vorgespannt ist. Es sei bemerkt, daß gemäß Fig. 1 die Ventilschließkörper 12 und 15 als Kugeln und die Druckfedern 13 und 16 als Schraubenfedern ausgebildet sind, jedoch können anstelle der kugelförmigen Ventilschließkörper 12 und 15 auch anders geformte Ventilschließkörper vorgesehen sein. Ferner können die hier als Schraubenfedern ausgebildeten Druckfedern 13 und 16 auch andere geeignete Vorspann- oder Federmittel sein.

Der Darstellung der Fig. 1 entnimmt man desweiteren, daß das Saugventil 10 an einem axialen Ende eines Zylinderraums für den Pumpenkolben 5 ausgebildet ist. Das Druckventil 11 ist im wesentlichen senkrecht dazu ausgebildet, d. h. die Öffnungs- bzw. Schließrichtung des Druckventils 11 ist bezogen auf den Zylinderraum im wesentlichen radial zur Öffnungs- bzw. Schließrichtung des Saugventils 10 vorgesehen. In Fig. 1 ist das Druckventil 11 am Basisabschnitt 9 der Patrone bzw. des Bauelementes 7 angeordnet, es kann jedoch mit Vorteil auch am hülsenförmigen Abschnitt 8 vorgesehen sein.

Die Ventilpatrone 7 ist als eine gesondert montier- und prüfbare Baueinheit ausgebildet. Die Ventilpatrone bzw. das Bauelement 7 kann somit in vorteilhafter Weise vor dem Einbau und außerhalb des Pumpengehäuses 2 zusammen mit dem Saugventil 10 und dem Druckventil 11 auf ihre Funktionsfähigkeit hin geprüft werden. Desweiteren läuft der Kolben 5 nicht direkt im Pumpengehäuse 2, sondern in der Ventilpatrone 7 und insbesondere im hülsenförmigen Abschnitt 8 der Patrone 7. Durch die Ausbildung des hülsenförmigen Abschnitts 8 an dem Bauelement 7 ist die Lauffläche des Pumpenkolbens 5 unempfindlich gegen Verformungen, Oberflächenfehler oder andere Ungleichmäßigkeiten, die durch Bearbeitungsoperationen am Gehäuse 2 auftreten könnten. Ferner muß die Kolbenlaufbohrung auch nicht mehr gehärtet oder eloxiert werden, um eine gewisse Verschleißfestigkeit der Laufbahn des Pumpenkolbens 5 zu erhalten. Ein weiterer Vorteil besteht darin, daß bei erhöhten Anforderungen an die Kolbenpumpe 1, wie beipielsweise bei einem Einsatz in einer ASR- bzw. ESP-Anlage, die Kolbenpumpe 1 dahingehend angepaßt werden kann, daß einfach ein geeigneter Werkstoff für die Ventilpatrone 7 ausgewählt wird, anstatt eine aufwendige Änderung bzw. Bearbeitung des Gehäuses 2 vorzunehmen. Insbesondere werden hierdurch unterschiedliche Beschichtungs- bzw. Eloxatdicken für eine ABS- und eine ASR- oder ESP-Anlage vermieden.

Während des Betriebs der Kolbenpumpe 1 wird in einer Druckhubphase, in der sich der Pumpenkolben 5 bezüglich der Mittelachse M nach außen bewegt, die Brems- bzw. Hydraulikflüssigkeit aus einem Druckraum 20 verdrängt. Zu Dichtigkeitszwecken kann an einer am Pumpenkolben 5 ausgebildeten Nut umfangsmäßig zumindest eine Dichtung 21 vorgesehen sein. Bevorzugt ist die Dichtung jedoch in einer Nut am Außenumfang der Pumpenpatrone 7 angeordnet (in Fig. 1 nicht gezeigt). Die unter Druck stehende Flüssigkeit in dem Druckraum 20 drückt nun den Ventilschließkörper 15 des Druckventils 11 gegen die Vorspannung der Druckfeder 16 von seinem Sitz weg, wodurch unter Druck stehende Flüssigkeit zu einem (nicht dargestellten) Druckmittelverbraucher, z.B. den Radbremsen eines Kraftfahrzeuges, übertragen wird. In dieser Phase wird das Saugventil 10 gegen seinen in der Ventilpatrone 7 ausgebildeten Sitz gedrückt und bleibt geschlossen. In einer nachfolgenden Saughubphase, während der sich der Pumpenkolben 5 bezüglich der Achse M nach innen bewegen, bleibt das Druckventil 11 geschlossen, d.h. der Ventilschließkörper 15 wird durch die Vorspannkraft der Druckfeder 16 gegen seinen Ventilsitz gedrückt. Während dieser Saughubphase wird durch die Volumenvergrößerung und der damit verbundenen Druckminderung der Flüssigkeit im Druckraum 20 das Saugventil 10 geöffnet. Dann wird Hydraulikflüssigkeit, vorzugsweise aus einem nicht dargestellten Niederdruckspeicher, über den Kanal 22 in den Druckraum 20 angesaugt.

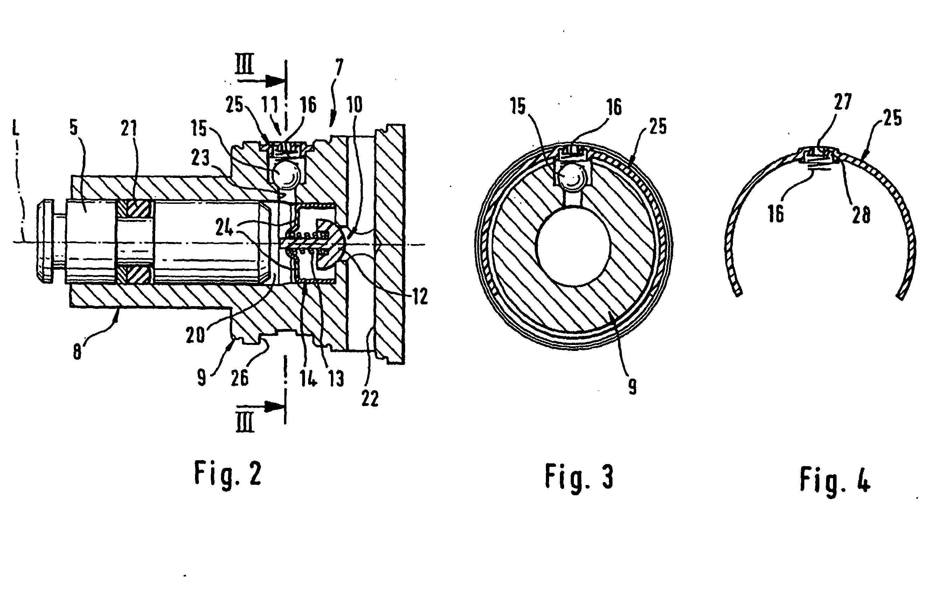

In Zusammenhang mit den Fig. 2 bis 4 wird im folgenden der Aufbau des Druckventils 11 eines ersten Ausführungsbeispiels der Ventilpatrone 7 näher erläutert. In dem Abschnitt 9 der Ventilpatrone bzw. des Bauelementes 7 ist eine im wesentlichen senkrecht oder radial zu einer Längsachse L der Patrone 7 ausgebildete, und vorzugsweise zweistufige Bohrung 23 vorgesehen. An der Stelle der Stufe der Bohrung 23 ist ein kegelstumpfförmiger Abschnitt ausgebildet, der als Ventilsitz für den Ventilschließkörper 15 dient. Eine vorzugsweise aus einem elastischen Material hergestellte Halteklammer 25 wird auf die Ventilpatrone 7 in Art einer Schnappverbindung aufgesteckt und greift dabei in eine insbesondere zweistufige, umlaufende Nut 26 am äußeren Umfang der Ventilpatrone 7 ein. An der Halteklammer 25 ist die Druckfeder 16 vorgesehen, die zur Vorspannung des Ventilschließkörpers 15 gegen dessen Sitz dient. Die Halteklammer 25 ist in diesem Ausführungsbeispiel ein im wesentlichen ringförmiges Element, das sich um den größten Teil des Außenumfangs der Ventilpatrone 7 herum erstreckt. Etwa mittig an der Halteklammer 25 ist eine Bohrung 27 ausgebildet, um im geöffneten Zustand des Druckventils 11 eine Strömungsmittelverbindung zwischen dem Druckraum 20 und einem Druckmittelverbraucher vorzusehen. Auf der der Ventilpatrone 7 zugewandten Innenseite der Halteklammer 25 ist eine Ringnut 28 um die Bohrung 27 herum angeordnet, um die Druckfeder 16 aufzunehmen bzw. zu lagern, so daß die Druckfeder 16 in vorteilhafter Weise gemeinsam mit der Halteklammer 25 montiert werden kann.

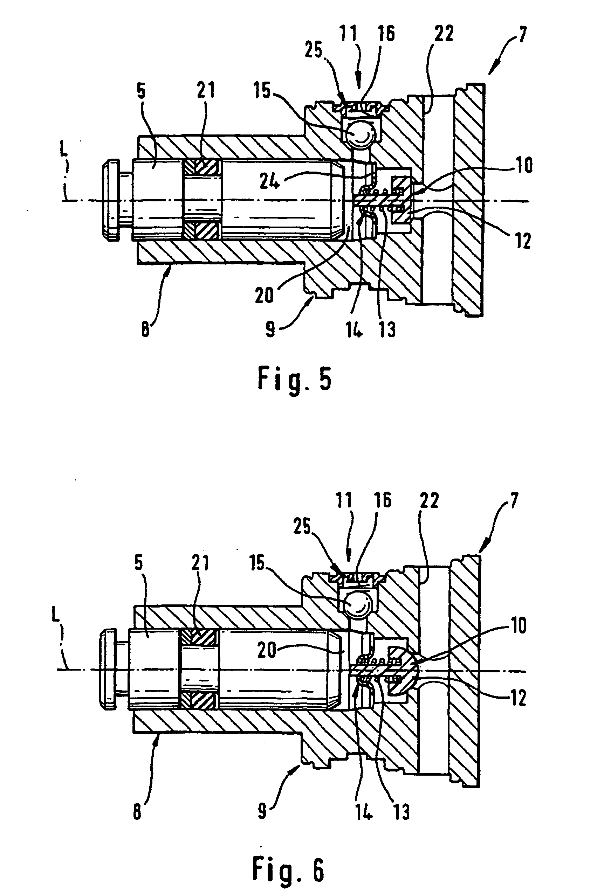

In den Fig. 5 und 6 ist schematisch in einer Längsschnittsansicht eine Ventilpatrone 7 gemäß einem zweiten bzw. dritten Ausführungsbeispiel der vorliegenden Erfindung dargestellt. Die in den Fig. 5 und 6 dargestellten Ausführungsbeispiele unterscheiden sich von dem in Zusammenhang mit Fig. 2 erläuterten Ausführungsbeispiel einer erfindungsgemäßen Ventilpatrone 7 im wesentlichen durch den Aufbau des Saugventils 10, d.h. insbesondere in der Ausbildung des Ventilschließkörpers 12 und des Halteelementes 14. Während der Ventilschließkörper 12 gemäß Fig. 6 eine halbkugelförmige Schließfläche aufweist und damit dem Ventilschließkörper 12 aus Fig. 2 entspricht, weist der Ventilschließkörper 12 gemäß Fig. 5 eine nahezu ebene Fläche auf, die gegebenenfalls mit einen Absatz versehen ist und mit dem an dem Bauelement 7 ausgebildeten Ventilsitz zusammenwirkt. Die Halteelemente 14 sind in Fig. 5 und 6 identisch und im wesentlichen in Form einer Scheibe ausgebildet, die beispielsweise in die Patrone 7 eingepreßt oder auf andere Art und Weise mit dieser verbunden ist.

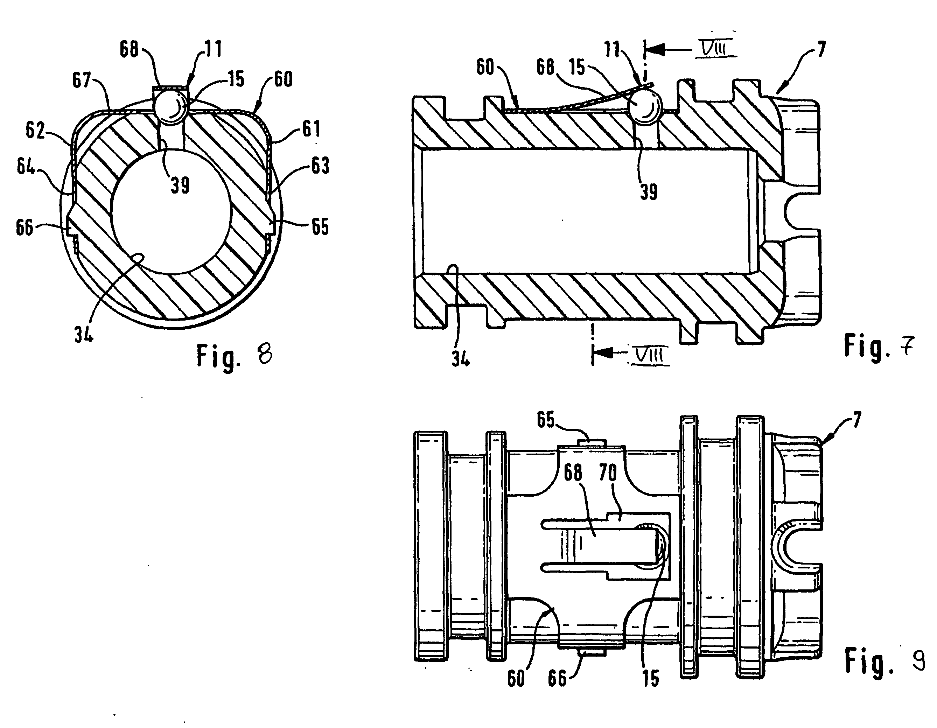

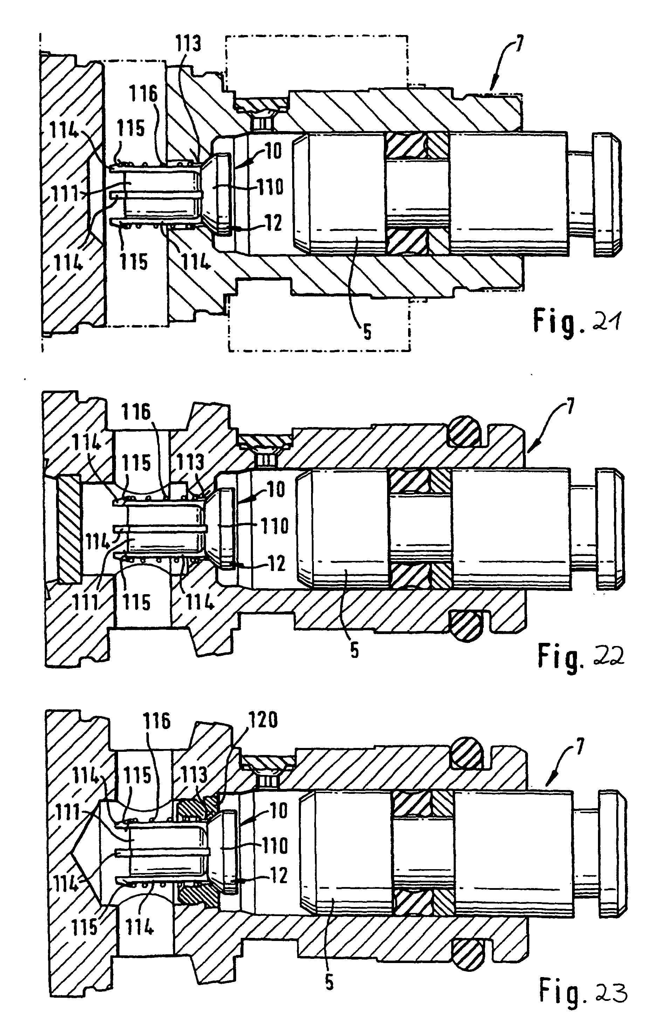

In Zusammenhang mit den Fig. 7 bis 10 wird im folgenden ein anderes Ausführungsbeispiel der vorliegenden Erfindung näher erläutert. Das Druckventil 11 weist einen kugelförmigen Ventilschließkörper 15 auf, der gegen eine radiale Bohrung 39 mit einer Halteklammer 60 vorgespannt ist. Gemäß der Querschnittsansicht der Fig. 17 ist die Halteklammer 60 im wesentlichen U-förmig ausgebildet. Die Halteklammer 60 ist aus einem Blechband ausgestanzt und weist zwei Schenkelabschnitte 61 und 62 auf, in denen Aussparungen 63 bzw. 64 vorgesehen sind. Die Ventilpatrone 7 ist aus Kunststoff hergestellt und ist an ihren Seiten abgeflacht ausgebildet. Die Ventilpatrone 7 weist an ihren abgeflachten Seiten Vorsprünge 65 und 66, die auch als Nasen bezeichnet werden können, auf, welche bei der Herstellung der Ventilpatrone 7 mitangespritzt werden.

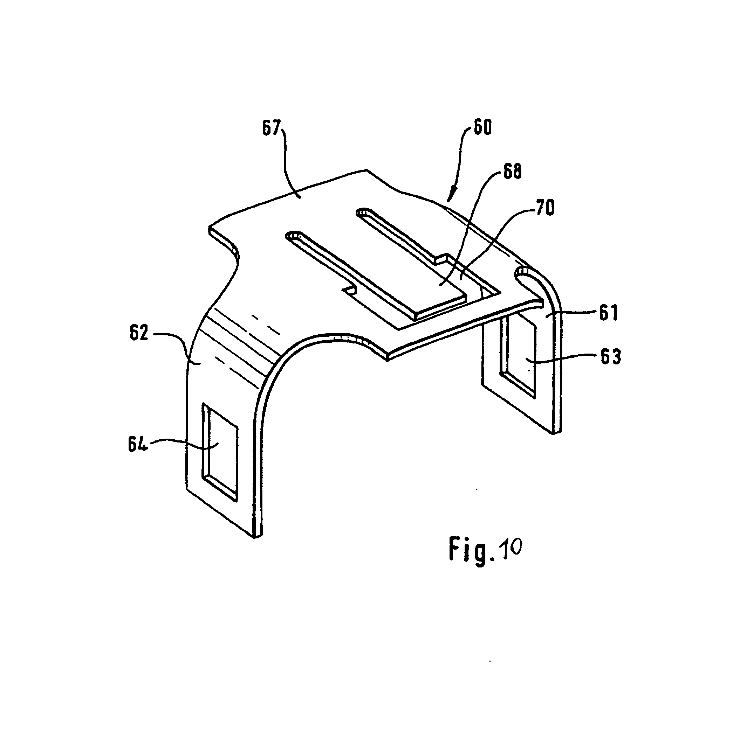

Die Aussparungen 63 und 64 in den Schenkelabschnitten 61 bzw. 62 der Halteklammer 60 sind in die seitlich auf der Ventilpatrone 7 ausgebildeten Vorsprünge 65 bzw. 66 eingerastet. In einem Basisabschnitt 67 der Halteklammer 60 ist eine Lasche 68, die auch als Federzunge bezeichnet werden kann, ausgebildet, die den Ventilschließkörper 15 unter Vorspannung gegen dessen Ventilsitz hält. Es sei bemerkt, daß die Aussparungen 63, 64 und die zur Ausbildung der Lasche 68 erforderliche Aussparung 70 gleichzeitig mit dem Ausstanzen der äußeren Kontur der Halteklammer 60 hergestellt werden. Anschließend werden die Schenkelabschnitte 61 und 62 gebogen. Es findet daher bei der Herstellung der Halteklammer 60 kein Verbiegen des Ventilvorspannelements, nämlich der Lasche 68, während der Herstellung statt. Beim Biegevorgang der Halteklammer 60 kann eine entsprechende, definierte Vorspannung der Schenkelabschnitte 61 und 62 gegenüber den abgeflachten Seiten der Ventilpatrone 7 vorgesehen werden, um ein Lösen der Halteklammer 60 von der Ventilpatrone 7 bzw. der Lasche 68 von dem Ventilschließkörper 15 zu verhindern. Der Darstellung der Fig. 9 und 10 entnimmt man, daß die Schenkelabschnitte 61 und 62 in etwa mittig an dem Basisabschnitt 67 der Halteklammer 60 ausgebildet sind und in etwa die halbe Breite des Basisabschnitts 67 besitzen.

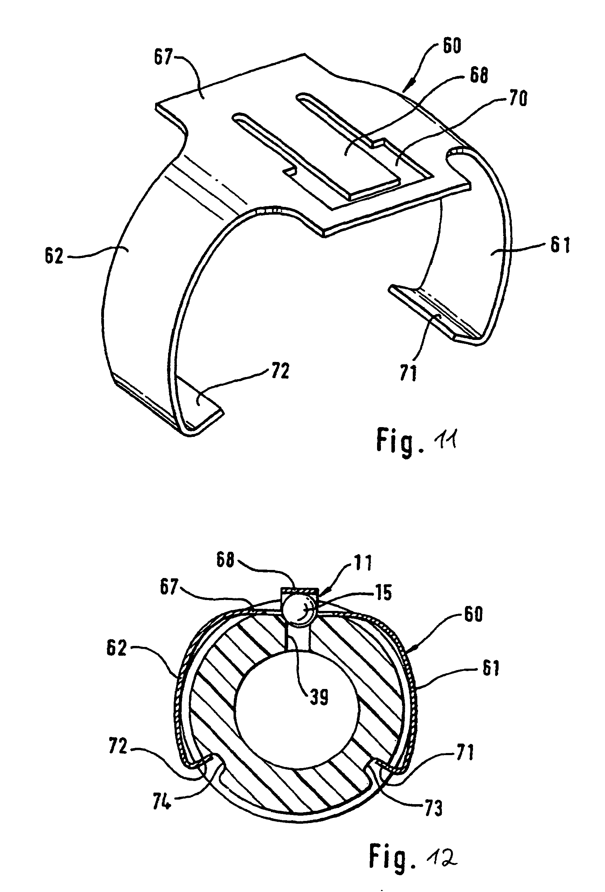

In den Fig. 11 und 12 ist eine Variante zur Befestigung der Halteklammer 60 auf der Ventilpatrone 7 schematisch dargestellt. Man entnimmt den Fig. 11 und 12, daß gemäß dieser Variante die Enden 71 bzw. 72 der Schenkelabschnitte 61 und 62 umgebogen sind. Die gemäß dieser erfindungsgemäßen Variante im Querschnitt im wesentlichen rund ausgebildete Ventilpatrone 7 weist an ihrer Außenseite zwei Aussparungen 73 und 74 auf. Die radiale Bohrung 39 und die Aussparungen 73 bzw. 74 sind in etwa äquidistant um den Außenumfang der Ventilpatrone 7 angeordnet. Beim Aufsetzen der Halteklammer 60 auf die Ventilpatrone 7 schnappen die umgebogenen Enden 71 und 72 in die entsprechend geformten Aussparungen 73 bzw. 74 ein. Ein Vorteil dieser Variante besteht darin, daß die erforderliche Biegung zum Einschnappen, um die Lasche 68 permanent unter Vorspannung auf die Ventilpatrone 7 zu pressen, vornehmlich in den schmalen Schenkelabschnitten 61 und 62 der Halteklammer 60 stattfindet. Ein Abheben der Federzunge 68 von dem Ventilschließkörper 15 kann somit durch die Formgebung der Schenkelabschnitte 61 und 62 verhindert werden.

Es sei bemerkt, daß durch die gewählte Art der Befestigung der Halteklammer 60 auf der Ventilpatrone 7 gemäß den Fig. 7-12 ein Verdrehen der Zunge 68 unmöglich ist.

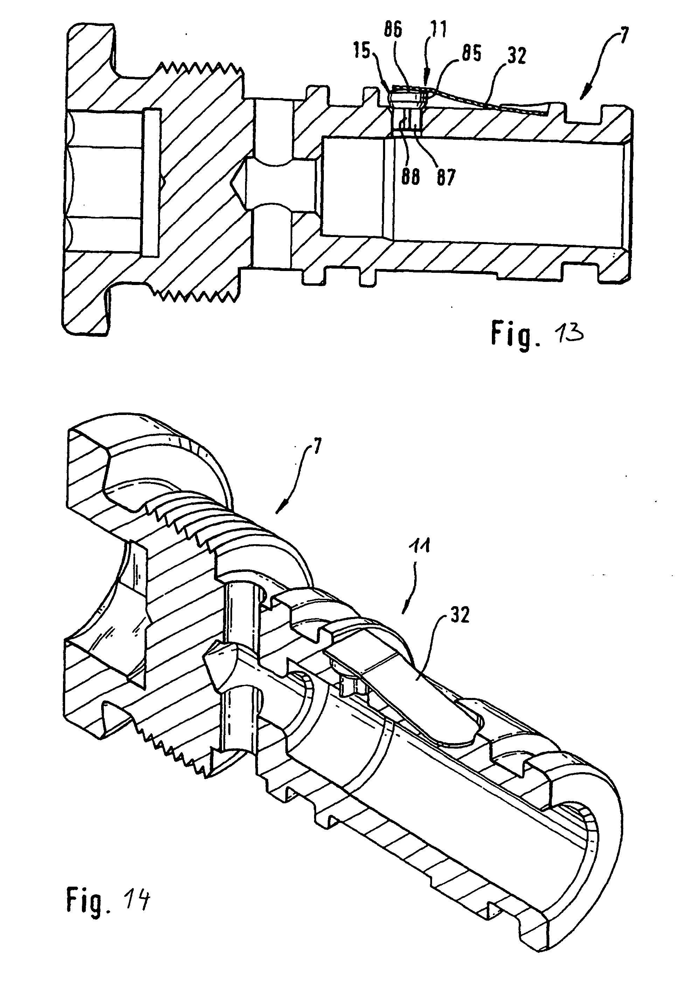

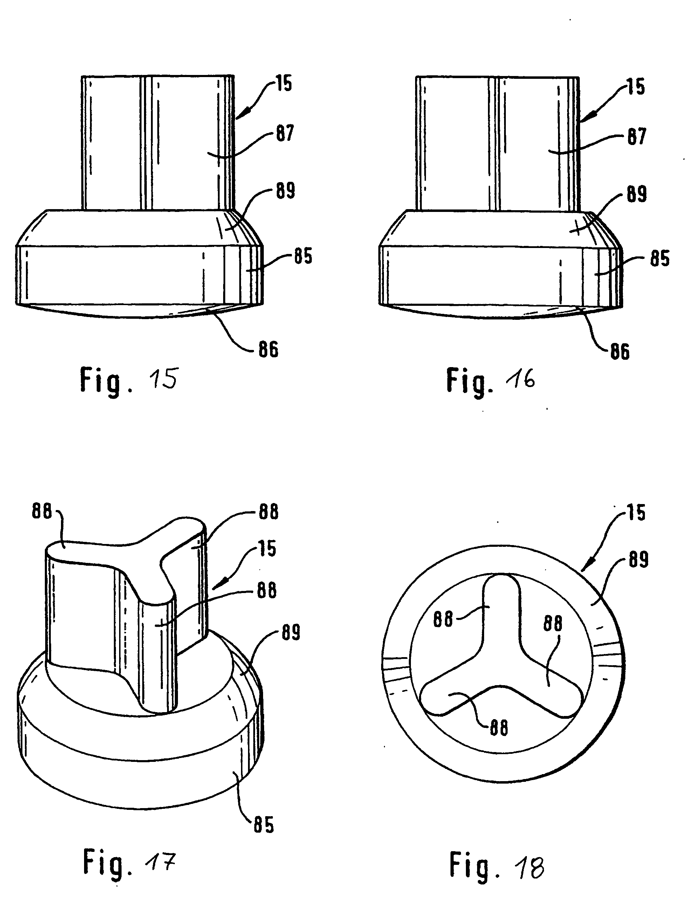

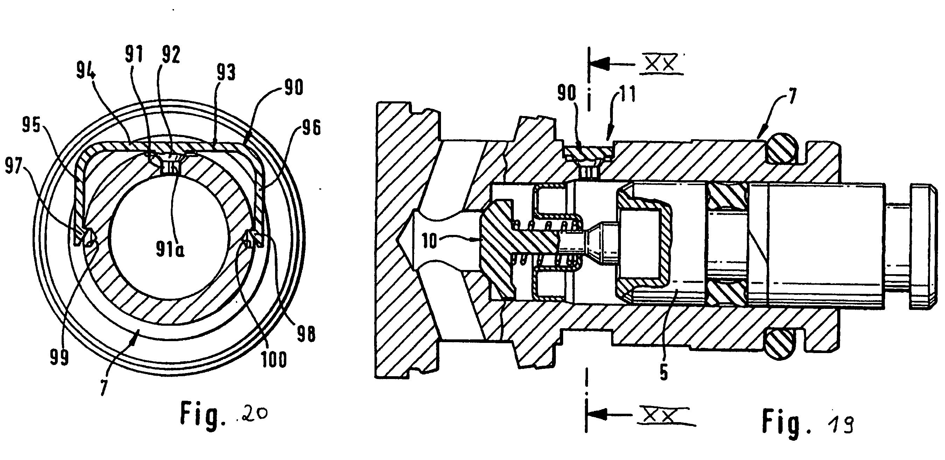

In Zusammenhang mit den Fig. 13 bis 18 wird im folgenden ein Ventilschließkörper 15 aus Kunststoff, z. B. PEEK, beschrieben. Dies ist deshalb vorteilhaft, da sich ein Ventilschließkörper aus Stahl sich mit der Zeit in den Ventilsitz einarbeitet, was zu Undichtigkeiten des Druckventils 11 führt. Der Ventilschließkörper 15 weist einen oberen Abschnitt 85 mit einer auf dessen Oberseite ausgebildeten, leichte Wölbung 86 auf. Ferner weist der Ventilschließkörper 15 einen Führungsabschnitt 87 auf, der die Form eines Zapfens besitzt und in der radialen Bohrung 39 geführt ist. Der Führungsabschnitt 87 ist so geformt, daß Bremsflüssigkeit an diesem vorbeiströmen kann. Dazu weist der Führungsabschnitt 87 drei, um ca. 120 Grad versetzt ausgebildete Rippen 88 auf, die man am besten in den Darstellungen der Fig. 17 und 18 erkennen kann. Die Wölbung 86 dient dazu, den Führungsabschnitt 87 stets gegen die Innenfläche der Bohrung 39 zu drücken. Zwischen dem Abschnitt 85 und dem Führungsabschnitt 87 weist der der Ventilschließkörper 15 einen Dichtabschnitt 89 auf, der flächig auf dem Ventilsitz abdichtet. Dazu ist der Dichtabschnitt 89 im wesentlichen kugelförmig ausgebildet. Der Führungsabschnitt 87 reibt beim Öffnen und Schließen des Druckventils 11 an der Innenfläche der radialen Bohrung 39 und sorgt auf diese Weise für eine Dämpfung des Ventilschließkörpers 15. Dies ist deshalb vorteilhaft, weil insbesondere bei niedrigen Drehzahlen eines die Kolbenpumpe antreibenden Motors pfeifende Geräusche auftreten können, die vermutlich auf ein Schwingen des Ventilschließkörpers 15 zurückzuführen sind. Die der Bewegung des Führungsabschnitts 87 aufgeprägte Reibung sorgt somit für eine Reduzierung dieser Geräusche. Alternativ kann erfindungsgemäß diese Dämpfung bei der Verwendung einer Schraubendruckfeder anstelle der dargestellten Blattfeder 32 als Vorspannelement für das Druckventil 11 auch durch eine Verwendung einer konischen Feder, die ebenfalls eine Dämpfung durch Reibung an deren Windungen aufweist, erzeugt werden.

In den Fig. 19 und 20 ist ein weiteres Ausführungsbeispiel der vorliegenden Erfindung schematisch dargestellt. Die Ventilpatrone 7 weist ein hochdruckfestes Druckventil 11 auf. Es ist eine einzige Halteklammer 90 vorgesehen, in dem ein Ventilschließkörper, Federmittel zur Vorspannung des Ventilschließkörpers und Befestigungsmittel zur Befestigung des Federmittels auf der Ventilpatrone 7 integriert sind. Die halteklammer 90 ist durch ein Spritzgußverfahren aus einem hochtemperaturfesten Thermoplast-Kunststoff, z. B. PEEK, hergestellt. Die Halteklammer 90 weist einen Führungsabschnitt 91, einen Ventilschließkörper 92 und einen Haltebügelabschnitt 93 auf. Der Führungsabschnitt 91 ist im wesentlichen ein Zapfen mit vier kreuzförmig angeordneten Stegen 91a und dient zur Führung des kugelförmig ausgebildeten Ventilschließkörpers 92. Die dargestellte Ausbildung des Führungsabschnitts 91 dient insbesondere zur Geräuschverminderung, wie oben bereits beschrieben wurde. Wie man in Fig. 20 erkennt, ist der Haltebügelabschnitt 93 im Querschnitt U-förmig ausgebildet. Der Haltebügelabschnitt 93 weist eine Basis 94 und zwei dazu senkrecht gebogene Schenkel 95, 96 auf. An der Innenseite der Enden der Schenkel 95, 96 sind Rastnasen 97 bzw. 98 zur Befestigung der Halteklammer 90 an der Ventilpatrone 7 ausgebildet. Die Ventilpatrone 7 weist an ihren Seiten Hinterschneidungen 99, 100 auf, in welche die Rastnasen 97 bzw. 98 einrasten. Die Halteklammer 90 kann somit durch ein einfaches Aufstecken auf die Ventilpatrone 7 an dieser befestigt werden. Es sei bemerkt, daß bei diesem Ausführungsbeispiel der Haltebügelabschnitt 93 in zwei Richtungen vorgespannt wird, so daß sich eine definierte Mindestanpreßkraft auf am Schließkörper 92 und ein spielfreier Sitz der Rastnasen 97 und 98 in den Hinterschneidungen 99 bzw. 100 ergibt.

In den Fig. 21 und Fig. 22 sind strömungsgünstige, leicht zu montierend Druck-und Saugventile 10 schematisch dargestellt. Das Saugventil 10 weist einen aus einem hochtemperaturfesten Thermoplast-Kunststoff, z. B. PEEK, hergestellten Ventilschließkörper 12 auf. Der Ventilschließkörper 12 weist einen Dichtabschnitt 110 und einen Führungsabschnitt 111 auf. Der Dichtabschnitt 110 ist entsprechend seinem Ventilsitz konisch ausgebildet. Der Führungsabschnitt 111, der zur Führung des Ventilkörpers 12 in einer axialen Bohrung 113 in der Ventilpatrone 7 dient, weist vier axiale Rippen 114 auf, an deren Außenseite Vorsprünge 115 zur saugseitigen Lagerung eines Endes einer als Schraubenfeder ausgebildeten Druckfeder 116 ausgebildet sind. Das andere Ende der Druckfeder 116 ist ebenfalls saugseitig an einer in der Bohrung 113 ausgebildeten Stufe gelagert. Die dargestellten Ausführungsbeispiele sind deshalb besonders vorteilhaft, da ein ansonsten erforderliches Halteelement für die Druckfeder 116 eingespart wird. Ferner bietet die Anordnung der Druckfeder 116 in einer Stufe der axialen Bohrung 113 den Vorteil, daß angesaugte Bremsflüssigkeit nicht durch die Windungen der Druckfeder 116 hindurch gesaugt werden muß, wodurch der Strömungswiderstand bei einem Saughub des Pumpenkolbens 5 entscheidend verringert wird.

Bei dem in Fig. 23 schematisch dargestellten Ausführungsbeispiel der vorliegenden Erfindung ist der Ventilsitz für das Saugventil 10, d. h. insbesondere die axiale Bohrung 113 nicht in der Ventilpatrone 7 sondern in einem gesonderten Ventilsitzelement 120 ausgebildet. Das Ventilsitzelement 120 wird in der Axialbohrung der Ventilpatrone 7 befestigt und gestattet somit eine Vormontage des Saugventils 10 außerhalb der Ventilpatrone 7.

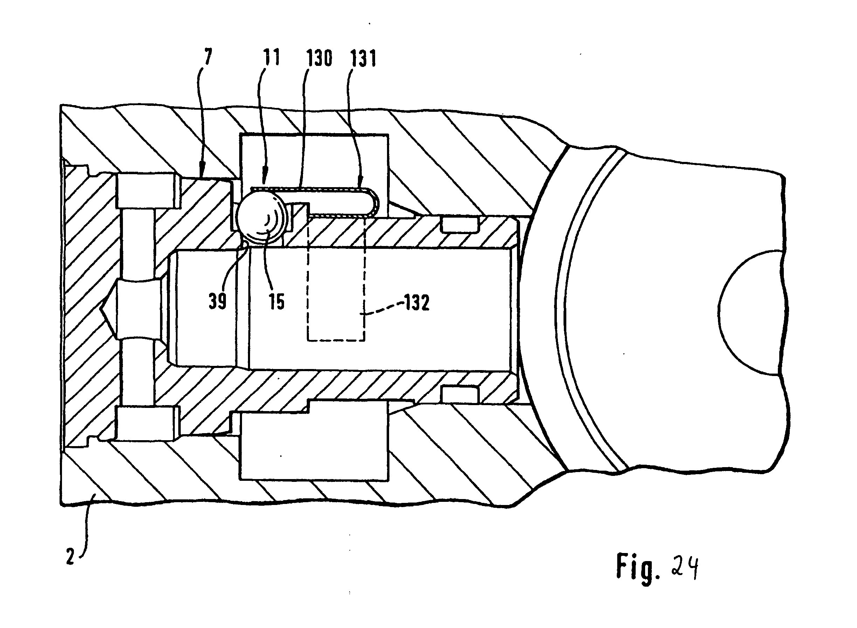

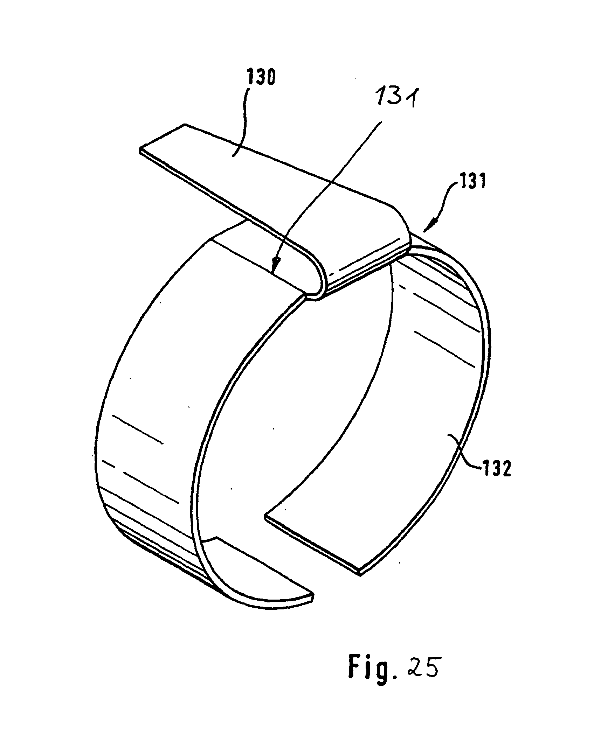

In Zusammenhang mit den Fig. 24 und 25 wird im folgenden ein anderes Ausführungsbeispiel der vorliegenden Erfindung beschrieben. Das Druckventil 11 weist einen kugelförmigen Ventilschließkörper 15 auf, der von einem Federabschnitt 130 einer an der Ventilpatrone 7 befestigten Halteklammer 131 aus Federblech gegen seinen in der radialen Bohrung 39 ausgebildeten Ventilsitz gedrückt wird. Die Halteklammer 131 weist, neben dem Federabschnitt 130, einen senkrecht dazu ausgebildeten, beinahe geschlossenen Ringabschnitt 132 auf, der zur Montage von vorne axial über die Ventilpatrone 7 gezogen wird und kraftschlüssig auf beinahe dem gesamten Außenumfang der Ventilpatrone 7 gehalten ist. Durch das axiale Aufziehen des Ringabschnitts 132 über die Ventilpatrone 7 wird nur der Ringabschnitt 132 geweitet, weshalb der Federabschnitt 130 auch nach der Befestigung eine große Klemmkraft aufweist. Der Federabschnitt 130 ist im wesentlichen U-förmig an der dem Ventilschließkörper 15 abgewandten Seite gebogen, um eine maximale federnde Länge bei minimaler Einbaulänge zu erzielen. Ferner ermöglicht die Biegung des Federabschnitts 130 um 180 Grad stets eine normale Anpreßung des Ventilschließkörpers 15 gegen seinen Ventilsitz. Eine schräge Anpreßung des Ventilschließkörpers 15 ist dahingehend nachteilig, daß eine schräge Krafteinleitung durch das Federelement zu einem einseitigen Verschleiß des Ventilsitzes führt. Dazu sei bemerkt, daß bei einigen, zuvor beschriebenen Varianten der Erfindung (vgl. insbesondere die Fig. 7 und 13), die radiale Bohrung schräg ausgebildet ist, um den Ventilschließkörper 15 immer senkrecht gegen seinen Ventilsitz zu drücken.

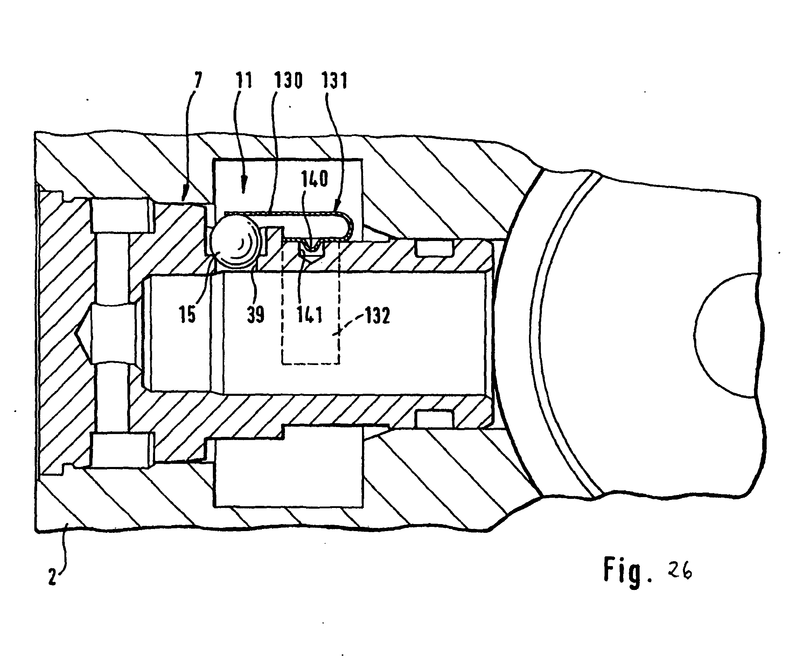

Um ein axiales Verdrehen und eine Verschiebung der Halteklammer 131 auf der Ventilpatrone 7 zu verhindern, weist die Halteklammer 131 gemäß einem, in Fig. 26 dargestellten Ausführungsbeispiel der vorliegenden Erfindung einen in radialer Richtung U-förmig eingebogenen Abschnitt 140 auf, der in eine auf der Außenseite der Ventilpatrone 7 ausgebildeten Bohrung 141 einrastet. Die Bohrung 141 ist zwischen der radialen Bohrung 39 und dem U-förmig gebogenen Ende des Federabschnitts 130 angeordnet. Selbstverständlich können auch andere geeignete Mittel zur Zentrierung der Halteklammer 131, wie z. B. ein auf der Halteklammer 131 ausgebildeter Vorsprung, vorgesehen sein.

Die Ausbildung der Halteklammer 131 des Druckventils 11 gemäß den Ausführungsbeispielen nach Fig. 24 und 26 der vorliegenden Erfindung ist deshalb besonders vorteilhaft, weil im Fall einer gehärteten Ventilpatrone 7 eine Befestigung eines Federelements, wie z. B. einer Blattfeder durch Verstemmen nicht möglich ist. Die Notwendigkeit der Verwendung einer gehärteten Ventilpatrone 7 ergibt sich daher, daß sich bei hohen Pumpendrücken, z. B. im Dauerlauf bei etwa 200 bar, der Pumpenkolben 5 in die Ventilpatrone 7 "eingräbt".

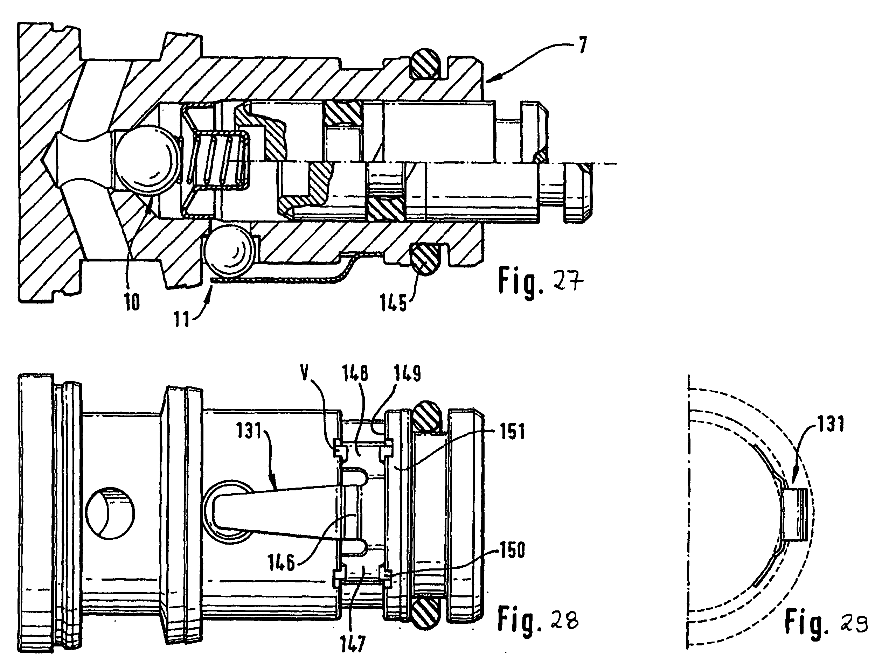

In den Fig. 27 bis 29 ist ein zusätzliches Ausführungsbeispiel der vorliegenden Erfindung dargestellt. Die Ventilpatrone 7 ist erfindungsgemäß mit einem Saugventil 10 und einem Druckventil 11 als eigenständig handhabbares Bauelement ausgebildet. Mittels eines O-Ringes 145 kann die Ventilpatrone bzw. das Bauelement 7 druckdicht in ein nicht dargestelltes Pumpengehäuse eingesetzt werden. Die Anordnung des O-Ringes 145 an dieser Stelle ist dessen Anordnung am Kolben vorzuziehen, die bereits oben beschrieben worden ist. Das Druckventil 11 umfaßt eine als Blattfeder 131 ausgebildete Federzunge, die, verglichen mit den vorherigen Ausführungsbeispielen, auf andere Art und Weise mit der Ventil- oder Pumpenpatrone 7 verbunden ist. Mauchmal besteht das Problem, daß eine insbesondere schräg gefräste Nut zur Aufnahme einer Blattfeder 32 eines Druckventils 11 eine kostenintensive Fertigung der Nut an der Ventilpatrone 7 erfordert. Ist die Blattfeder 32, wie in den Fig. 13 und 14 gezeigt, mit der Pumpenpatrone 7 verstemmt oder verschweißt, so wird die Blattfeder 32 in einem Bereich mit der Ventilpatrone 7 verbunden, an dem die höchste Beanspruchung auftritt.- Aus diesem Grunde wird in diesem Ausführungsbeispiel vorgeschlagen, die Befestigung der Blattfeder 131 an der Ventilpatrone 7 aus der hochbeanspruchten Biegezone 146 der Feder 131 weg zu verlegen. Mit Vorteil weist die Blattfeder 131 hier zwei Abschnitte 147, 148 auf, die in eine Nut 149 der Patrone 7 eingreifen. Die Blattfeder 131 ist in vorteilhafter Weise mittels mehrerer Verstemmungsbereiche 150 an Absätzen 151 der Nut 149 mit der Patrone 7 verbunden. Die Verstemmung V erfolgt dabei in vorteilhafter Weise in ausreichendem Seitenabstand zur hochbeanspruchen Biegezone 146. Die Nut 149 kann kostengünstig, beispielsweise durch Drehen einer Metallpatrone oder Gießen einer Kunststoffpatrone, hergestellt sein.

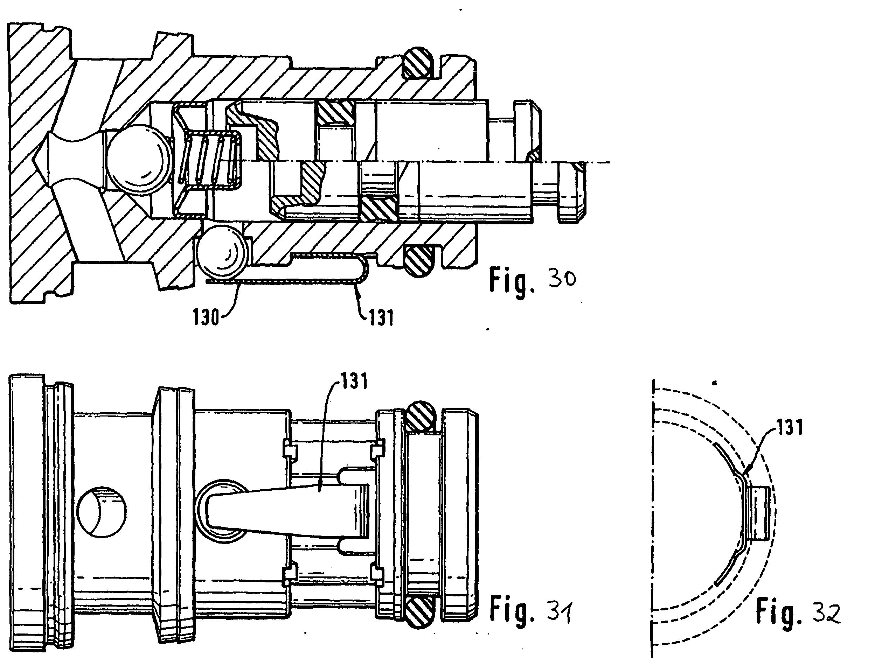

Das Ausführungsbeispiel nach Fig. 30 bis 32 entspricht weitestgehend dem vorherigen, so daß hiermit vollinhaltlich darauf bezug genommen wird. Die Blattfeder 131 weist jedoch einen umgebogenen Federabschnitt 130 auf, so daß die federnde Länge der Feder 131 vergrößert ist. Dadurch kann die gesamte Blattfeder 131 kürzer gehalten werden.

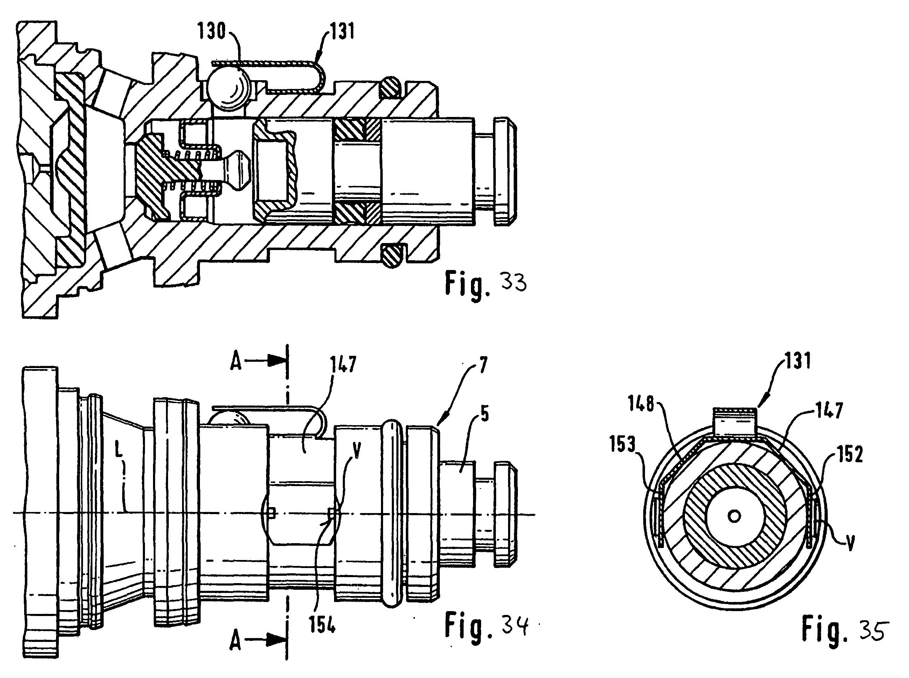

Im Ausführungsbeispiel nach Fig. 33 bis 35 ist eine Ventilpatrone 7 mit einem Pumpenkolben 5 und einem in Federabschnitt 130 nach Art einer Blattfeder 131 dargestellt. In diesem Ausführungsbeispiel ist die Blattfeder 131 analog zum vorherigen Ausführungsbeispiel umgebogen und weist somit einen federnden Abschnitt 130 auf. Der Unterschied besteht darin, daß die Abschnitte 147, 148 der Feder 131 mit schenkelartigen Verlängerungen 152, 153 versehen sind, so daß die Feder 131 insbesondere zur Vormontage auf die Ventilpatrone 7 aufgeklemmt werden kann. Insbesondere wenn das Bauelement bzw. die Ventilpatrone 7 aus Metall gefertigt ist, bietet es sich in diesem Ausführungsbeispiel an, die Verstemmung V beidseitig auf die Höhe der Bohrungs- bzw. Längsachse L der Ventilpatrone 7 zu verlegen. Hierdurch kann die mechanische Belastung einer nicht dargestellten, die Patrone 7 während des Verstemmvorganges haltenden Aufnahmevorrichtung deutlich verringert werden. Das in Fig. 34 kreisbogenförmig dargestellte verstemmte Material der Patrone 7 fließt in Nuten 154 der Blattfeder 131 ein und sorgt dort für einen Formschluß zwischen der Feder 131 und der Ventilpatrone 7.

### Bezugszeichenliste:

- 1: Kolbenpumpe
- 2: Gehäuse
- 3: Antriebswelle
- 4: Exzenter
- 5: Pumpenkolben
- 6: Bohrung
- 7: Ventilpatrone oder Bauelement
- 8: hülsenförmiger Abschnitt
- 9: (Basis-)Abschnitt
- 10: Saugventil
- 11: Druckventil
- 12: Ventilschließkörper
- 13: Druckfeder
- 14: Halteelement
- 15: Ventilschließkörper
- 16: Druckfeder
- 20: Druckraum
- 21: Dichtung
- 22: Kanal
- 23: Bohrung
- 24: Öffnung
- 25: Halteklammer
- 26: Nut
- 27: Bohrung
- 28: Ringnut
- 60: Halteklammer
- 61: Schenkel
- 62: Schenkel
- 63: Aussparung
- 64: Aussparung
- 65: Vorsprung oder Nase
- 66: Vorsprung oder Nase
- 67: Basisabschnitt
- 68: Lasche oder Federzunge
- 70: Aussparung
- 71: Ende
- 72: Ende
- 73: Ausnehmung
- 74: Ausnehmung
- 85: Abschnitt
- 86: Wölbung
- 87: Führungsabschnitt
- 88: Rippen
- 89: Dichtabschnitt
- 90: Halteklammer
- 91: Führungsabschnitt
- 92: Ventilschließkörper
- 93: Haltebügelabschnitt
- 94: Basis
- 95: Schenkel
- 96: Schenkel
- 97: Rastnase
- 98: Rastnase
- 99: Hinterschneidung
- 100: Hinterschneidung
- 110: Dichtabschnitt
- 111: Führungsabschnitt
- 113: Bohrung
- 114: Rippe
- 115: Vorsprung
- 116: Druckfeder
- 120: Ventilsitzelement
- 130: Federabschnitt
- 131: Halteklammer
- 132: Ringabschnitt oder Ringteil
- 140: Abschnitt oder Teil
- 141: Bohrung
- 145: O-Ring
- 146: Biegezone
- 147: Abschnitt
- 148: AbschnitL
- 149: Nut
- 150: verstemmungsbereich
- 151: Absatz
- 152: Schenkel
- 153: Schenkel
- 154: Nut

- M: Mittelachse
- L: Längsachse
- V: Verstemmung

## Patentansprüche

1. Kolbenpumpe (1), insbesondere zur Druckmittelförderung in hydraulischen, schlupfgeregelten Bremsanlagen, mit zumindest einem Kolben (5), einem Saugventil (10) und einem Druckventil (11), das einen, mittels einem Vorspannelement in Richtung auf einen Ventilsitz beaufschlagten Ventilschließkörper (15) aufweist, und wobei das Druckventil (11) einschließlich dem zugehörigen Vorspannelement an einem eigenständig handhabbaren Bauelement (7) befestigt ist, **dadurch gekennzeichnet, dass** das Vorspannelement des Druckventils (11) einen beinahe geschlossenen Ringabschnitt (132) als Halteklammer (60;90;131) und neben dem Ringabschnitt (132) einen Federabschnitt (68;130) für den Ventilschließkörper (15) derart aufweist, daß zur Befestigung des Vorspannelementes (90) an dem Bauelement (7) der Ringabschnitt (132) aufzuweiten ist, um eine Klemmkraft-Schwächung des Federabschnitt (68;130) zu vermeiden.

2. Kolbenpumpe nach Anspruch 1, **dadurch gekennzeichnet, daß** die Halteklammer (60;131) auf das Bauelement (7) aufschiebbar oder aufklemmbar ist.

3. Kolbenpumpe nach einem der Anspruch 1, **dadurch gekennzeichnet, daß** Federabschnitt (68;130) und Ringabschnitt (132) der Halteklammer (131) senkrecht zueinander ausgebildet sind.

4. Kolbenpumpe nach Anspruch 1, **dadurch gekennzeichnet, daß** der Federabschnitt (130) im wesentlichen um 180° umgebogen sowie als Blattfeder ausgebildet ist.

5. Kolbenpumpe nach Anspruch 4, **dadurch gekennzeichnet, daß** sich die Blattfeder (32;41;50;131) in Längsrichtung (L) des Bauelementes (7) erstreckt.

6. Kolbenpumpe nach Anspruch 4 oder 5, **dadurch gekennzeichnet, daß** die Blattfeder (131) außerhalb ihrer Biegezone (146) am Bauelement (7) befestigt ist.

7. Kolbenpumpe (1) nach Anspruch 1, **dadurch gekennzeichnet, daß,** das Bauelement (7) einen hülsenartigen Abschnitt (8) aufweist, in welchem der Kolben (5) geführt ist.

8. Kolbenpumpe (1) nach Anspruch 1, **dadurch gekennzeichnet, daß** das Bauelement (7) in einem Gehäuse (2) der Kolbenpumpe (1) durch Verstemmung oder Verclinchung befestigt ist.

9. Kolbenpumpe (1) nach Anspruch 7, **dadurch gekennzeichnet, daß** das Bauelement (7) im wesentlichen einen Basisabschnitt (9) und einen hülsenartig ausgebildeten Abschnitt (8) aufweist.

10. Kolbenpumpe (1) nach Anspruch 7 oder 9, **dadurch gekennzeichnet, daß** das Druckventil (11) am hülsenartigen Abschnitt (8) ausgebildet ist.

11. Kolbenpumpe (1) nach Anspruch 9, **dadurch gekennzeichnet, daß** das Saugventil (10) am Basisabschnitt (9) ausgebildet ist.

12. Kolbenpumpe (1) nach einem der vorhergehenden Ansprüche, **dadurch gekennzeichnet, daß** das Saugventil (10) axial und das Druckventil (11) radial zur Längsachse (L) des Bauelementes (7) angeordnet sind.

13. Kolbenpumpe (1) nach einem der vorhergehenden Ansprüche, **dadurch gekennzeichnet, daß** das Bauelement (7) aus Kunststoff, wie beispielsweise PEEK, hergestellt ist.

14. Kolbenpumpe (1) nach einem der vorhergehenden Ansprüche, **dadurch gekennzeichnet, daß** das Bauelement (7) einen im wesentlichen konstanten Außendurchmesser aufweist.

15. Kolbenpumpe (1) nach Anspruch 9, **dadurch gekennzeichnet, daß** der Basisabschnitt (9) als separates Bauteil (78) ausgebildet ist.

## Claims

1. Piston pump (1), in particular for the pressure fluid conveyance in hydraulic slip-controlled brake systems, comprising at least one piston (5), a suction valve (10) and a pressure valve (11), which includes a valve closure member (15) that is acted upon by means of a preloading element in the direction of a valve seat, and wherein the pressure valve (11) including the associated preloading element is secured to a structural unit (7) adapted to be independently handled,
**characterized in that** the preloading element of the pressure valve (11) includes an almost closed annular portion (132) as a retaining clip (60;90;131) and beside the annular portion (132) has a spring section (68; 130) for the valve closure member (15) in such a fashion that for attachment of the preloading element (90) on the structural unit (7) the annular portion (132) must be expanded to avoid that the clamping force of the spring section (68; 130) is weakened.

2. Piston pump according to claim 1,
**characterized in that** the retaining clip (60; 131) can be pushed over or clamped upon the structural unit (7).

3. Piston pump according to claim 1,
**characterized in that** the spring section (68; 130) and annular section (132) of the retaining clip (131) are formed perpendicular to each other.

4. Piston pump according to claim 1,
**characterized in that** the spring section (130) is substantially bent by 180° and is configured as a leaf spring.

5. Piston pump according to claim 4,
**characterized in that** the leaf spring (32; 41; 50; 131) extends in the longitudinal direction (L) of the structural unit (7).

6. Piston pump according to claim 4 or 5,
**characterized in that** the leaf spring (131) externally of the bending zone (146) thereof is secured to the structural unit (7).

7. Piston pump (1) according to claim 1,
**characterized in that** the structural unit (7) comprises a sleeve-type section (8) in which the piston (5) is guided.

8. Piston pump (1) according to claim 1,
**characterized in that** the structural unit (7) is secured within a housing (2) of the piston pump (1) by caulking or clinching.

9. Piston pump (1) according to claim 7,
**characterized in that** the structural unit (7) substantially comprises a base section (9) and a section (8) of sleeve-type design.

10. Piston pump (1) according to claim 7 or 9,
**characterized in that** the pressure valve (11) is formed on the sleeve-type section (8).

11. Piston pump (1) according to claim 9,
**characterized in that** the suction valve (10) is formed on the base section (9).

12. Piston pump (1) according to any one of the preceding claims,
**characterized in that** the suction valve (10) is arranged axially and the pressure valve (11) is arranged radially relative to the longitudinal axis (L) of the structural unit (7).

13. Piston pump (1) according to any one of the preceding claims,
**characterized in that** the structural unit (7) is made of a plastic material, such as PEEK.

14. Piston pump (1) according to any one of the preceding claims,
**characterized in that** the structural unit (7) is of a substantially constant outer diameter.

15. Piston pump (1) according to claim 9,
**characterized in that** the base section (9) is formed as a separate structural unit (78).

## Revendications

1. Pompe à pistons, en particulier pour le transport d'un fluide sous pression dans des systèmes de freinage hydrauliques à régulation du glissement, comportant au moins un piston (5), une soupape d'aspiration (10) et une soupape de refoulement (11) qui comporte un corps d'obturation de soupape (15) sollicité au moyen d'un élément de précontrainte vers un siège de soupape, et la soupape de refoulement (11) avec son élément de précontrainte étant fixée sur un composant (7) pouvant être manipulé de manière autonome, **caractérisée en ce que** l'élément de précontrainte de la soupape de refoulement (11) comporte un segment d'anneau (132) presque fermé servant d'agrafe de maintien (60 ; 90 ; 131) et à côté du segment d'anneau (132) un segment de ressort (68 ; 130) pour le corps d'obturation (15) de la soupape de manière que pour la fixation de l'élément de précontrainte (90) sur le composant (7), le segment d'anneau (132) doit être élargi pour éviter un affaiblissement de la force de serrage du segment de ressort (68 ; 130).

2. Pompe à pistons selon la revendication 1, **caractérisée en ce que** l'agrafe de maintien (60 ; 131) peut être enfilée ou pincée sur le composant (7).

3. Pompe à pistons selon l'une des revendications 1 à 2, **caractérisée en ce que** le segment de ressort (68 ; 130) et le segment d'anneau (132) de l'agrafe de maintien (131) sont réalisés perpendiculaires l'un à l'autre.

4. Pompe à pistons selon la revendication 1, **caractérisée en ce que** le segment de ressort (130) est replié sensiblement de 180° et réalisé sous la forme d'un ressort à lame.

5. Pompe à pistons selon la revendication 4, **caractérisée en ce que** le ressort à lame (32 ; 41 ; 50 ; 131) s'étend dans la direction longitudinale (L) du composant (7).

6. Pompe à pistons selon la revendication 4 ou 5, **caractérisée en ce que** le ressort à lame (131) est fixé à l'extérieur de sa zone de pliage (146) sur le composant (7).

7. Pompe à pistons (1) selon la revendication 1, **caractérisée en ce que** le composant (7) comporte un tronçon (8) de type manchon dans lequel est guidé le piston (5).

8. Pompe à pistons (1) selon la revendication 1, **caractérisée en ce que** le composant (7) est fixé dans un carter (2) de la pompe à pistons (1) par matage ou sertissage.

9. Pompe à pistons (1) selon la revendication 7, **caractérisée en ce que** le composant (7) comporte essentiellement un tronçon de base (9) et un tronçon (8) réalisé à la manière d'un manchon.

10. Pompe à pistons (1) selon la revendication 7 ou 9, **caractérisée en ce que** la soupape de refoulement (11) est réalisée sur le tronçon (8) de type manchon.

11. Pompe à pistons (1) selon la revendication 9, **caractérisée en ce que** la soupape d'aspiration (10) est réalisée sur le tronçon de base (9).

12. Pompe à pistons (1) selon l'une des revendications précédentes, **caractérisée en ce que** la soupape d'aspiration (10) est disposée axialement et la soupape de refoulement (11) radialement par rapport à l'axe longitudinal (L) du composant (7).

13. Pompe à pistons (1) selon l'une des revendications précédentes, **caractérisée en ce que** le composant (7) est fabriqué en matière plastique, telle que par exemple du PEEK.

14. Pompe à pistons (1) selon l'une des revendications précédentes, **caractérisée en ce que** le composant (7) présente un diamètre extérieur sensiblement constant.

15. Pompe à pistons (1) selon la revendication 9, **caractérisée en ce que** le tronçon de base (9) est réalisé comme composant séparé (78).
